# EUROPEAN PATENT APPLICATION

(11) **EP 2 278 675 A1**
(43) Date of publication of application: **26.01.2011**
(21) Application number: 08874545.0
(22) Date of filing: 17.12.2008
(51) Int. Cl.: H02G 3/22, H01B 17/58, B60R 16/02

(54) **GROMMET**

(30) Priority: 03.06.2008 JP 2008146294
(71) Applicant: Sumitomo Wiring Systems, Ltd., Yokkaichi-city Mie 510-8503 (JP)
(72) Inventor: OKUHARA, Takashi, Yokkaichi-shi Mie 510-8503 (JP); SAKATA, Tsutomu, Yokkaichi-shi Mie 510-8503 (JP); UJITA, Satoshi, Yokkaichi-shi Mie 510-8503 (JP)
(74) Representative: Gendron, Vincent Christian
(86) International application number: PCT/JP2008/072989
(87) International publication number: WO 2009/147761

(57) **Abstract**

Even if a wire harness that passes a grommet is bent sharply, a vehicle body latch recess of the grommet is not deformed, thereby enhancing a sealing function. A grommet 1 comprises: an inner tube 5 having a smaller diameter and passing electrical cables in a wire harness in a close contact manner; an annular coupling section 6 protruding from an outer peripheral surface of an intermediate part between both ends of the inner tube 5 at a pushing-in side P1 and a drawing-out side P2 in a longitudinal direction; and an outer tube 8 having a larger diameter, continued to an outer peripheral surface of the annular coupling section 6, and coaxially disposed around the inner tube 5 through a space. The outer tube 8 is provided with a slant wall section 11 that reduces an diameter from a larger thickness portion 9 at a coupling position with the annular coupling section 6 to the drawing-out side P2. The outer tube 8 is provided with a vehicle body latch recess 10 between the larger thickness portion 9 and the slant wall section 11 in an annular manner. An inner peripheral surface at a smaller diameter end side of the slant wall section 11 is spaced through a given clearance apart from an outer peripheral surface of the inner tube 5. The both ends of the inner tube 5 protrude outward from the outer tube 8 at the pushing-in side P1 and drawing-out side P2.

## Description

### FIELD OF THE INVENTION

This invention relates to a grommet and more particularly relates to a grommet that is mounted on a wire harness to be wired in a motor vehicle and is attached to a through-hole in a vehicle body panel to protect, waterproof, and dustproof a portion of the wire harness inserted in the through-hole.

### BACKGROUND OF THE INVENTION

Heretofore, a wire harness to be wired from an engine room in a motor vehicle to a passenger room mounts a grommet, and the grommet is attached to a through-hole provided in a vehicle body panel for partitioning a vehicle body of the motor vehicle into the engine room and the passenger room so as to protect the wire harness passing the through-hole and to waterproof, dustproof, and sound-insulate, from an engine room side to a passenger room side.

The present applicant has proposed a so-called one-motion type grommet in which a vehicle body latch recess provided on an outer peripheral surface is engaged with an peripheral edge around the through-hole merely by pushing the grommet into the through-hole in the vehicle body panel from a one side.
As shown in Figure 10, an one-motion type grommet 100 disclosed in JP 2002-171644 A (Patent Document 1) is mounted on a wire harness W/H, the grommet 100 is attached to a through-hole 3 in a vehicle body panel 2 that partitions a vehicle body into an engine room X and a passenger room Y merely by pushing the wire harness into the through-hole 3, and the wire harness W/H is drawn out from the engine room X to the passenger room Y. That is, a side of the engine room X across the panel 2 defines a pushing-in side P1 for the wire harness W/H while a side of the passenger room Y across the panel 2 defines a drawing-out side P2 for the wire harness W/H.

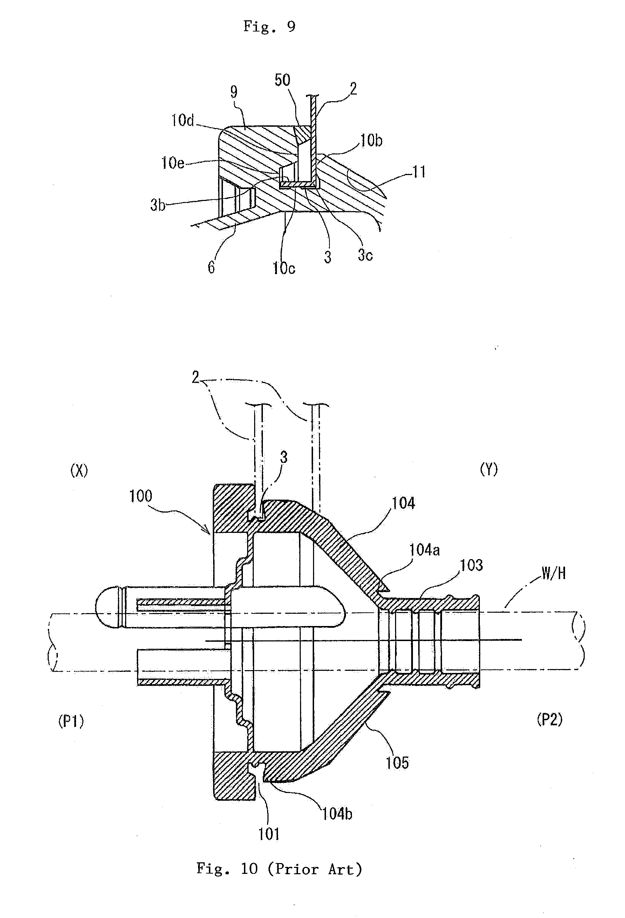

As shown in Figure 10, the grommet 100 includes a smaller diameter tubular section 103 through which the wire harness W/H passes in a close contact manner, and an enlarging diameter tubular section 104 provided on a pushing-in side end of the section 103. A smaller diameter end 104a of the diameter enlarging section 104 is continued to the pushing-in side end of the smaller diameter tubular section 103. A vehicle body latch recess 101 is provided on an outer peripheral surface of an enlarging diameter end 104b of the section 104. When the grommet 100 is inserted into and attached to the through-hole 3 in the vehicle body panel 2, the smaller diameter tubular section 103 is inserted into the through-hole 3, the wire harness W/H is pushed into the drawing-out side P2 from the pushing-in side P1. Then, the enlarging diameter tubular section 104 is deflected inward and a peripheral edge around the through-hole 3 falls down in the vehicle body latch recess 101. Consequently, the grommet 100 is engaged with the vehicle body panel 2.
At this time, in order to reduce an inserting force of the grommet 100 into the through-hole 3 in the vehicle body panel 2, the grommet 100 is provided on its outer peripheral surface with projecting ribs 105. This can reduce a contact area between the grommet 100 and the through-hole 3.

The above one-motion type grommet 100 can be mounted on the through-hole 3 in the vehicle body panel 2 merely by pushing the grommet 100 from the engine room side. In addition, since the enlarging diameter tubular section 104 is provided on the outer peripheral surface with the projecting ribs 105, there is an advantage for reducing the inserting force of the grommet 100.

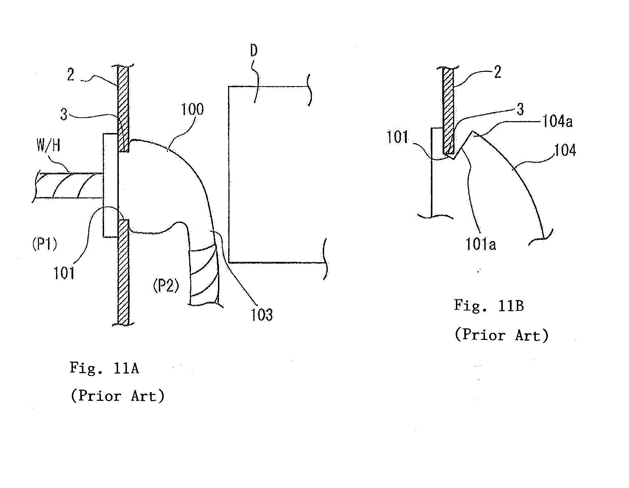

Currently, a wiring space for the wire harness has been decreased in association with an abruptly increase of electrical equipments to be installed in a motor vehicle. Consequently, as shown in Figure 11A, the wire harness W/H that passes the through-hole 3 in the vehicle body panel 2 will interfere with an electrical equipment D, if the wire harness W/H is arranged straightly. In particular, since electrical equipments to be installed in an instrument panel, from which the wire harness is drawn out, has been increased significantly, there will be a possibility that the wire harness W/H is bent at an angle of 90 (ninety) degrees, as shown in Figure 11A. Similarly, there will be a possibility that the wire harness may be bent at the angle of 90 degrees in the engine room.

If the wire harness W/H is bent at the angle of 90 degrees, as shown in Figure 11A, the smaller diameter tubular section 103 closely mounted on the wire harness W/H is also bent. The enlarging diameter tubular section 104 continued to the smaller diameter tubular section 103 is pulled in a bending direction, and the vehicle body latch recess 101 provided on the enlarging diameter tubular section 104 is also pulled. Consequently, as shown in Figure 11B, a slant wall side surface 101a of the vehicle body latch recess 101 is deformed to float up. Thus, there is a possibility that any deleterious effect will be applied to a sealing function between the inner peripheral surface of the through-hole 3 and the recess 101. Since the enlarging diameter tubular section 104 is designed to be easily deflected inward upon insertion into the through-hole 3 in the one-motion type grommet, the enlarging diameter tubular section 104 follows the pulling action in the bending direction. This will be susceptible to improvement.

Patent Document 1: JP 2002-171644 A

### SUMMARY OF THE INVENTION

### PROBLEMS THAT THE INVENTION IS TO SOLVE

In view of the above problems, an object of the present invention is to provide a grommet that does not lower a sealing function even if a wire harness is bent in arrangement after the wire harness passes a through-hole in a vehicle body panel.

### MEANS FOR SOLVING THE PROBLEMS

In order to achieve the above object, the present invention is directed to a grommet that is mounted on a wire harness, is engaged with a through-hole in a vehicle body, and is made of an elastic material. The grommet comprises: an inner tube having a smaller diameter and passing electrical cables in the wire harness in a close contact manner; an annular coupling section protruding from an outer peripheral surface of an intermediate part between both ends of the inner tube at a pushing-in side and a drawing-out side in a longitudinal direction; and an outer tube having a larger diameter, continued to an outer peripheral surface of the annular coupling section, and coaxially disposed around the inner tube through a space. The outer tube is provided with a slant wall section that reduces an diameter from a larger thickness portion at a coupling position with the annular coupling section to the drawing-out side. The outer tube is provided with a vehicle body latch recess between the larger thickness portion and the slant wall section in an annular manner. An inner peripheral surface at a smaller diameter end side of the slant wall section is spaced through a given clearance apart from an outer peripheral surface of the inner tube. The both ends of the inner tube protrude outward from the outer tube at the pushing-in side and the drawing-out side.

As described above, in the grommet of the present invention, the inner tube that passes the wire harness in the close contact manner and the outer tube provided with the vehicle body recess are separated through a great clearance apart from each other at the drawing-out side of the wire harness. Thus, even if the wire harness drawn out from the grommet and arranged in the passenger room side is bent sharply by an angle of about 90 degrees and the inner tube is bent, the deformation of the inner tube is not transmitted directly to the outer tube. Also, since the inner tube is coupled to the outer tube through the annular coupling section from the intermediate position of the inner tube spaced apart from the drawing-out side of the inner tube in the longitudinal direction, the deformation of the inner tube can be absorbed even in the annular coupling section, thereby preventing the deformation from being transmitted to the vehicle body latch recess provided on the larger diameter end of the outer tube. Thus, since the vehicle body latch recess is prevented from floating up on account of deformation even if the wire harness is bent sharply, it is possible to maintain the seal function between the vehicle body latch recess and the inner peripheral surface of the through-hole.

Preferably, the slant wall section of the outer tube is provided on a smaller diameter end with a drawing-out distal end side tubular portion that extends in parallel to an axial direction of the inner tube, and the clearance is defined between an inner peripheral surface of the drawing-out distal end side tubular portion and the outer peripheral surface of the inner tube.
Thus, since the slant wall section of the outer tube is provided on the smaller diameter end with the drawing-out distal end side tubular portion, it is possible to enhance contour-keeping strength of the outer tube and it is possible to restrain the deformation effect from affecting the slant wall section when the inner tube is deformed by the bending of the wire harness so that the inner tube contacts with the drawing-out distal end side tubular portion.
The inner peripheral surface of the smaller diameter end side of the slant wall section may be separated through a clearance apart from the outer peripheral surface of the inner tube without providing the drawing-out distal end side tubular portion on the slant wall section.

Preferably, a dimension of the clearance in a radial direction is set to be 1/2 to 3/2 (one-half to three-halves) of a radius of the inner tube. When the wire harness protruding from a drawing-out side distal end of the inner tube is bent at an angle of less than 90 degrees, the slant wall section is spaced apart from the inner tube by the clearance so that the slant wall is not deformed.
A length of the clearance is variable in accordance with an outer diameter of the inner tube. However, it is preferable that the length is 5 to 15 mm (five to fifteen millimeters).

Preferably, the slant wall section of the outer tube is provided on a smaller diameter end with a drawing-out distal end side tubular portion that extends in parallel to an axial direction of the inner tube, and the clearance is defined between an inner peripheral surface of the drawing-out distal end side tubular portion and the outer peripheral surface of the inner tube.
As described above, since the slant wall section is provided on the outer peripheral surface with the projecting ribs that are spaced apart one another in the peripheral direction, it is possible to decrease a contact area between the inner peripheral surface of the through-hole in the vehicle panel and the slant wall section and also to lower the inserting force of the grommet.
It is possible to carry out stable insertion by forming each of the projecting ribs into a stepped configuration with a flat surface on its top portion. Preferably, the number of projecting ribs is 4 to 8 (four to eight), and more preferably, 6 (six).

The distal end at the larger diameter side of each projecting rib is disposed at the distal end of the side surface of the vehicle body latch recess. Preferably, the smaller diameter end of each projecting rib is continued to the drawing-out distal end side tubular portion. If the distal end of each projecting rib continued to the distal end of the side surface of the vehicle body latch recess is formed into a configuration in which the top surface and both side surfaces are cut away at three sides, when the peripheral edge around the through-hole falls down into and engages the vehicle body latch recess, the edge can smoothly engages the recess without causing the projecting ribs to interfere with the edge around the through-hole.

A thickness of the annular coupling section is smaller than thicknesses of the inner and outer tubes. The annular coupling section protrudes slant toward an opposite side from the slant wall section beyond a coupling point with the inner tube. A pushing rib protrudes from a slant portion of the annular coupling section toward an inner peripheral surface of the slant wall section.

When the grommet is inserted into the through-hole in the vehicle body panel, a working person holds the wire harness at the pushing-in side of the inner tube and pushes the wire harness into the through-hole. Since the outer tube is coupled through the annular coupling section to the inner tube, the pushing force is hardly transmitted to the slant wall section at the drawing-out side of the outer tube. Accordingly, the annular coupling section is provided with the pushing rib, the pushing rib is pressed onto the inner peripheral surface at the drawing-out side of the slant wall section, and the pressing force is transmitted through the pushing rib to the slant wall section. This can enhance workability in insertion of the grommet.

Since the annular coupling section has the smaller thickness and protrudes slant without protruding directly in the radial direction, when the inner tube is deformed on account of the bending of the wire harness, the annular coupling section absorbs the deformation of the inner tube, thereby avoiding the deformation of the outer tube. Thus, even if the wire harness is sharply bent in the engine room, the annular coupling section absorbs the deformation and the vehicle body latch recess of the outer tube is not deformed.

Preferably, the annular coupling section is bent in a V-shape between the inner and outer tubes. This V-shape can increase an amount of absorbing the deformation at the annular coupling section, when the inner tube is deformed on account of the bending of the wire harness.

Preferably, the pushing rib is provided on a whole periphery of the annular coupling section in a peripheral direction of the annular coupling section, since this will uniform the pushing force to the slant wall section.
In the case where the wire members such as the opener cable and the feed water hose are inserted into the grommet, the pushing rib is divided in the peripheral direction at the inserting positions of the wire members.

A thickness of the pushing rib is 2 to 4 (two to four) times of that of the annular coupling section and is larger than a thickness of the slant wall section.
Thus, if the thickness of the pushing rib is great, it is possible to increase the pushing force to the slant wall section.

A projecting end of the pushing rib contacts with an inner surface of the slant wall section with the grommet being mounted on a vehicle body. The pushing rib, outer tube, inner tube, and annular coupling section surround an interior of the grommet to define a sound insulation space.
If the sound insulation space is provided by utilizing the pushing rib, it is possible to restrain noises caused in the engine room from transmitting to the passenger room, thereby keeping the passenger room in a silent condition.
If the pushing rib is formed into a continuous annular configuration in the peripheral direction, it is possible to define the sound insulation space as the closed space, thereby enhancing the sound insulation function.

Preferably, an intermediate part of the annular coupling section is bent toward the slant wall section, and the pushing rib protrudes from the bent intermediate part.
Thus, since the pushing rib is directed to the inner surface of the slant wall section, the pushing force is smoothly transmitted from the inner tube through the pushing rib to the annular coupling section.

Preferably, the outer tube is provided on an inner peripheral surface opposed to the pushing rib with a stopper projection, and the stopper projection serves to prevent the pushing rib from shifting from a pushing position.
Thus, since the outer tube is provided with the stopper projection, the projecting end that is pressed onto the inner peripheral surface of the slant wall section slides on the slant surface of the slant wall section, thereby preventing the projecting end from moving out from the slant wall section.

In the case where the wire members such as the opener cable and the feed water hose are inserted into the grommet, the through-apertures are provided in the slant wall section, outer guide pipes are provided on the peripheral edges around the through-apertures, and inner guide pipes are provided in the grommet. Preferably, these inner and outer guide pipes are provided with smaller diameter portions to seal and support the wire members at two positions.

### EFFECTS OF THE INVENTION

As described above, according to the present invention, in the case where the wire harness inserted in the grommet is bent sharply, the grommet of the present invention has a construction in which the vehicle body latch recess is not deformed, thereby obtaining a good sealing function.
That is, the outer tube provided with the vehicle body latch recess is separated through a space apart from the inner tube that is likely to be deformed by the wire harness, and the deformation of the inner tube is not transmitted directly to the outer tube. Accordingly, it is possible to prevent the vehicle body latch recess from floating up and to obtain a good sealing function.

### BRIEF EXPLANATION OF THE DRAWINGS

[Fig. 1] Figure 1A is a perspective view of a grommet of the present invention taken from a drawing-out side. Figure 1B is a perspective view of the grommet of the present invention taken from a pushing-in side.
[Fig. 2] Figure 2 is a plan view of the grommet shown in Figure 1, illustrating the grommet taken from the drawing-out side.
[Fig. 3] Figures 3 is a longitudinal section view of the grommet taken along lines III-III in Figure 2.
[Fig. 4] Figure 4 is a longitudinal section view of the grommet taken along lines IV-IV in Figure 2.
[Fig. 5] Figures 5 is a longitudinal section view of the grommet taken along line V-V in Figure 2.
[Fig. 6] Figure 6 is a cross section view of the grommet taken along lines VI-VI in Figure 4.
[Fig. 7] Figure 7 is a longitudinal section view of the grommet into which a wire harness is inserted and that is attached to a vehicle body.
[Fig. 8] Figure 8A is a side elevation view of the grommet in the case where the wire harness is bent at the drawing-out side of the grommet. Figure 8B is a side elevation view of the grommet in the case where the wire harness is bent at the pushing-in side of the grommet.
[Fig. 9] Figure 9 is a longitudinal section view of a main part of a modified grommet of the present invention.
[Fig. 10] Figure 10 is a longitudinal section view of a prior art grommet.
[Fig. 11] Figures 11A and 11B are explanatory views illustrating problems in the prior art grommet.

### EXPLANATION OF SIGNS

1: grommet
2: vehicle body panel
3: through-hole
5: inner tube
6: annular coupling section
8: outer tube
9: larger thickness portion
10: vehicle body latch recess
11: slant wall section
12: drawing-out distal end side tubular section
   12a: stopper projection
15: projecting rib
18: pushing rib
19: smaller thickness portion

### PREFERRED ASPECTS OF EMBODYING THE INVENTION

Referring now to the drawings, embodiments of a grommet in accordance with the present invention will be described below.

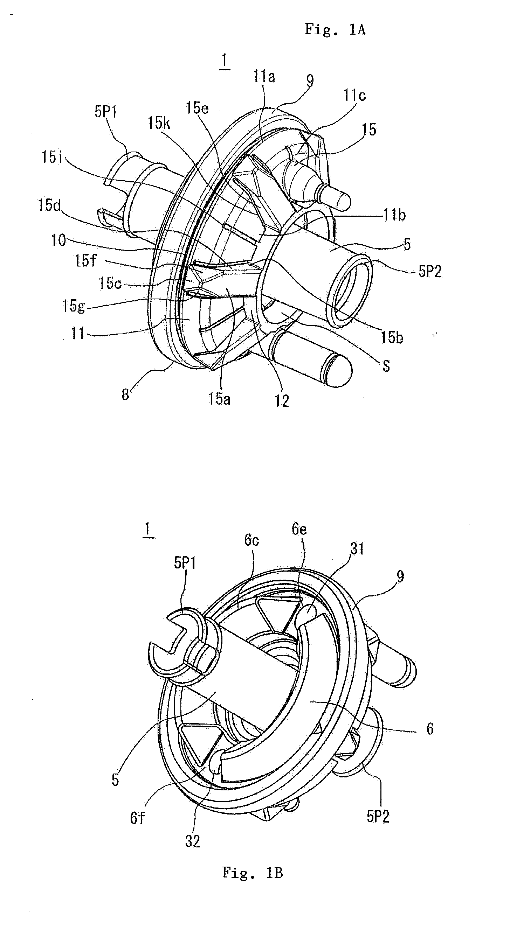

Figures 1A to 8B show an embodiment of a grommet in accordance with the present invention.
A grommet 1 is mounted on a wire harness W/H arranged from an engine room X in a vehicle motor via a through-hole 3 in a vehicle body panel 2 to a passenger room Y, as is the case with the prior art grommet shown in Figures 10 to 11B. The grommet 1 is engaged with a peripheral edge around the through-hole 3 to be attached to the vehicle body. The grommet 1 is a one-motion type grommet that is inserted into the through-hole 3 from an engine room X so as to be attached to the vehicle body. The one end of the grommet 1 defines a pushing-in side P1 while the other end defines a drawing-out side P2.

The grommet 1 is molded from rubber or elastomer.
The grommet 1 includes an inner tube 5 having a smaller diameter and permitting a set of electrical cables in the wire harness W/H to pass, an annular coupling section 6 that protrudes from an outer peripheral surface 5a on an intermediate part of the inner tube 5 between a pushing-in end 5P1 at the pushing-in side P1 and a drawing-out end 5P2 at the drawing-out side P2 in a longitudinal direction of the inner tube 5, and an outer tube 8 having a larger diameter and continued to an outer peripheral surface of the annular coupling section 6.

The outer tube 8 is coaxial with the inner tube 5 and is disposed through a space on an intermediate part of the inner tube 5 in its longitudinal direction. The inner tube 5 protrudes from opposite ends of the outer tube 8 at the pushing-in side P1 and the drawing-out side P2 in the longitudinal direction.
The outer tube 8 extends to the drawing-out side P2 from a connecting part between the outer tube 8 and an outer peripheral surface of the annular coupling section 6. A larger thickness portion 9 formed on the connecting part is provided on an outer peripheral surface with an annular vehicle body latch recess 10. A slant wall section 11 is continued to the larger thickness portion 9 and extends to the drawing-out side P2 to reduce a diameter of the portion 11 in the axial direction. The slant wall section 11 is provided on its distal end with a drawing-out distal end side tubular portion 12 that extends in parallel to the axial direction of the inner tube 5.

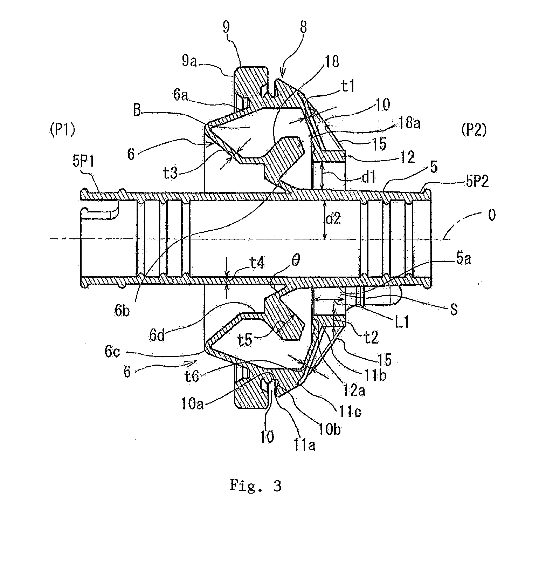

An annular clearance S (Figure 3) is defined between an inner peripheral surface of the drawing-out distal end side tubular portion 12 and the outer peripheral surface 5a of the inner tube 5 to separate the portion 12 apart from the inner tube 5. That is, a smaller diameter end of the outer tube 8 surrounds the outer peripheral surface of the inner tube 5 through the annular clearance S and the drawing-out side end 5P2 protrudes outward from the outer tube 8.

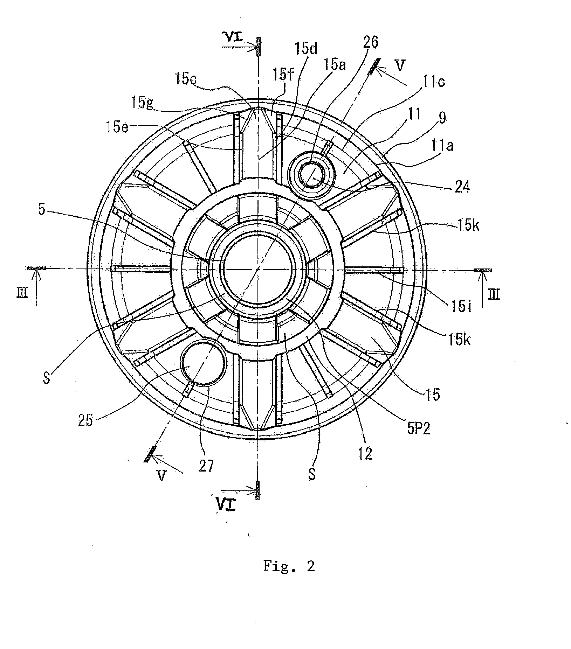

As shown in Figures 2 to 6, a radial distance d1 (Figure 3) of the annular clearance S is set to be 1/2 to 3/2 (one-half to three-halves) of a radius d2 (Figure 3) of the inner tube 5. It is preferable in the present embodiment that the radial distance d1 is 3/4 (three quarters) of the radius d2. A length L1 (Figure 3) of the drawing-out distal end side tubular portion 12 that extends through the annular clearance S in parallel to the outer peripheral surface 5a of the inner tube 5 may be altered in accordance with a size of the grommet 1. It is preferable in the present embodiment that the length L1 is 5 to 15 mm (five to fifteen millimeters).

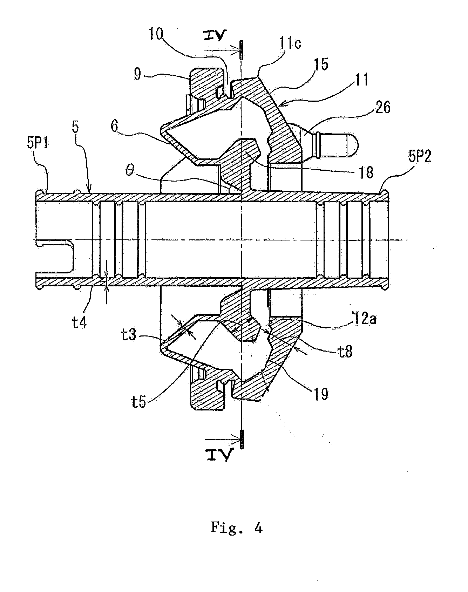

As shown in Figures 3 and 4, the larger thickness portion 9 of the outer tube 8 protrudes slightly toward the pushing-in side P1 from the connecting part between the larger thickness portion 9 and an outer peripheral end 6a of the annular coupling section 6. The pushing-in side distal end surface 9a defines an orthogonal surface to an axis O. The larger thickness portion 9 is provided on its outer peripheral surface with an annular vehicle body latch recess 10. A distal end of a drawing-out side surface 10b that stands up from a bottom surface 10a of the vehicle body latch recess 10 is continued to a larger diameter end 11a of the slant wall section 11. A smaller diameter end 11b of the slant wall section 11 is continued to the drawing-out distal end side tubular portion 12. A curved portion 11c is provided between the larger diameter end 11a and the smaller diameter end 11b so as to change an inclined angle of the outer peripheral surface of the slant wall section 11.

The slant wall section 11 is provided on the outer peripheral surface that changes the inclined angle with axially stepped projecting ribs 15 that extend from the larger diameter end 11a of the distal end of the drawing-out side surface 10b on the vehicle body latch recess 10 to the smaller diameter end 11b and are spaced apart from one another in the peripheral direction. An imaginary circle created by continuing the stepped projecting ribs 15 in the peripheral direction of the curved portion 11c is set to be equal to an inner diameter of the through-hole 3 in the vehicle body panel 2. In the present embodiment, the number of the stepped projecting ribs 15 is six (6) and the pitches of the ribs are sixty (60) degrees. A total peripheral length of top surfaces 15a (Figure 2) on the six stepped projecting ribs 15 is set to be 20 to 40 % (twenty to forty percent) of the outer peripheral surface on the curved portion 11c.

The stepped projecting ribs 15 couple their smaller diameter side end surfaces 15b to the outer peripheral surface of the drawing-out distal end side tubular portion 12.
As shown in Figures 1A and 1B, each stepped projecting rib 15 is provided on its larger diameter end side at the distal end of the drawing-out side surface 10b of the vehicle body latch recess 10 with slant surfaces 15c that incline the top surface 15a of the stepped projecting rib 15 downward to the drawing-out side surface 10b. Both side surfaces 15d and 15e of each stepped projecting rib 15 at their distal end sides across the slant surface 15c define slant surfaces 15f and 15g that approach to each other. That is, each stepped projecting rib 15 is provided on its larger diameter end with the slant surfaces 15, 15f, and 15g that are cut at three sides. Thus, since the distal end surface of each stepped projecting rib 15 is cut at the three sides to eliminate edges, the stepped projecting ribs 15 are not caught by the peripheral edge around the through-hole 3 when the peripheral edge around the through-hole 3 in the vehicle body panel 2 drops down into the vehicle body latch recess 10.

An inner peripheral surface of the outer tube 8 is parallel to the axial direction O from a position corresponding to the vehicle body latch recess 10 to a position corresponding to the curved portion 11c of the slant wall section 11. A thickness t1 (Figure 3) of the outer tube 8 is set to be small from the curved portion 11c to the drawing-out distal end side tubular portion 12. A thickness t2 (Figure 3) of the drawing-out distal end side tubular portion 12 is set to be larger than the thickness t1.

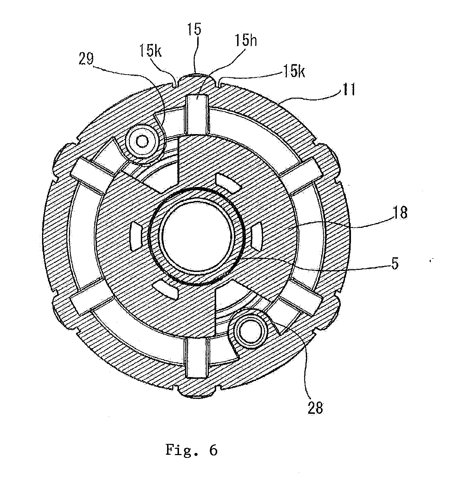

Furthermore, as shown in Figure 6, each stepped projecting rib 15 of the slant wall section 11 is provided in its inner peripheral surface with a groove 15h to reduce stiffness of each stepped projecting rib 15, thereby easily deflecting the stepped projecting ribs 15 inward when the stepped projecting ribs 15 are pressed onto the inner peripheral surface around the through-hole 3. Further, as shown in Figure 2, the slant wall section 11 is provided with axial grooves 15k and 15i on its outer surface at proximal ends of each projecting rib 15 and on each central parts between the adjacent projecting ribs 15, thereby facilitating to deflect the slant wall section 11.

As shown in Figures 3 and 4, the annular coupling section 6 that interconnects the outer tube 8 and inner tube 5 protrudes in a V-shaped configuration from an inner peripheral end 6b continued to the outer peripheral surface 5a of the inner tube 5 to the pushing-in side P1. The outer peripheral end 6a of the annular coupling section 6 is disposed at the pushing-in side P1 beyond the inner peripheral end 6b and is continued to the larger thickness portion 9 of the outer tube 8.
That is, although the smaller diameter side of the enlarging diameter tubular section is continued to the smaller diameter tubular section in the prior art one-motion type grommet 100 shown in Figure 10, the larger diameter side of the outer tube 8 (corresponding to the enlarging diameter tubular section) is continued through the annular coupling section 6 to the inner tube 5 in the grommet 1 of the present invention.
As shown in Figure 1B, the annular coupling section 6 includes flat surfaces 6e and 6f extending in the radial direction at two positions opposed to each other in the orthogonal directions and provided with inserting ports 31 and 32 for wire members 20 mentioned after. The annular coupling section 6 is not bent in a V-shape at the two positions.

A thickness t3 (Figure 3) of the annular coupling section 6 is set to be substantially equal to or less than a thickness t4 (Figure 3) of the inner tube 5 so as to be deflectable. An angle θ of the annular coupling section 6 that is slant coupled to the outer peripheral surface of the inner tube 5 is set to be 20 to 30 (twenty to thirty) degrees. Thus, the inner tube 5 and outer tube 8 are not interconnected to each other directly in the radial direction but interconnected to each other through the V-shaped annular coupling section 6. Thus, when the inner tube 5 is deformed in connection with bending of the wire harness W/H, the annular coupling section 6 absorbs the deformation of the inner tube 5, so that the deformation of the inner tube 5 is not transmitted to the outer tube 8.. This serves as a release portion.

The annular coupling section 6 is provided on its inclined portion between an inner peripheral end 6b and a V-shaped projecting end 6c with a bent portion 6d that is bent toward the slant wall section 11. A pushing rib 18 having a larger thickness protrudes from the bent portion 6d toward the slant wall section 11. As shown in Figure 6, the pushing rib 18 is continuous in its peripheral direction but it is divided at positions corresponding to guide inner tubes 28 and 29 for wire members 20 mentioned after.

A thickness t5 (Figure 3) of the pushing rib 18 is large enough to be 2 to 4 (two to four) times of the thickness t3 of the annular coupling section 6, is larger than the thickness t1 of the slant wall section 11, and is substantially the same as the thickness of the larger thickness portion 9.
The reason why the pushing rib 18 is a larger thickness is ascribable to the fact that, when the grommet 1 is inserted into the through-hole 3 in the vehicle body panel 2, a projecting end 18a of the pushing rib 18 contacts with the inner peripheral surface of the slant wall section 11 to permit the pushing force to be transmitted to the outer tube 8. When the grommet 1 is attached to the vehicle body panel 2, the projecting end 18a of the pushing rib 18 is disposed near the slant wall section 11 so that they can contact with each other. Thus, a sound-insulating space B (Figure 3) is defined among the pushing rib 18, the inner tube 5, the annular coupling section 6, and the outer tube 8.

As shown in Figures 3 and 4, the pushing rib 18 protrudes slightly slant in its outer diametrical direction. The projecting end 18a is opposed to the smaller diameter end of the slant wall section 11 continued to the drawing-out distal end side tubular portion 12. The drawing-out distal end side tubular portion 12 is provided with a stopper projection 12a, which protrudes inward from the slant wall section 11, at a side of the slant wall section 11 with which the pushing rib 18 contacts. Since the stopper projection 12a is provided on the drawing-out distal end side tubular portion 12, it is possible to prevent the projecting end 18a of the pushing rib 18 from slipping down into the drawing-out distal end side tubular portion 12 and to surely bring the pushing rib 18 into contact with the slant wall section 11 so as to transmit the pushing force to the slant wall section 11.

Furthermore, the slant wall section 11 is provided with an annular shallow recess in an inner surface from an outer diameter side, with which the projecting end 18a of the pushing rib 18 contacts, to the bent portion 11c. Thus, the slant wall section 11 is provided with a smaller thickness portion 19 having a smaller thickness t6. Since the slant wall section 11 is provided with a smaller thickness portion 19 on the curved portion 11c at the smaller diameter side, the smaller thickness portion 19 serves as a stress absorbing portion when the drawing-out distal end side tubular portion 12 is deformed on account of the bending of the wire harness. That is, a bending stress is concentrated in the smaller thickness portion 19, so that the drawing-out distal end side tubular portion 12 is hard to transmit its deformation to the vehicle body latch recess 10. The thickness t6 of the smaller thickness portion 19 is smaller than the thickness t3 of the annular coupling section 6.

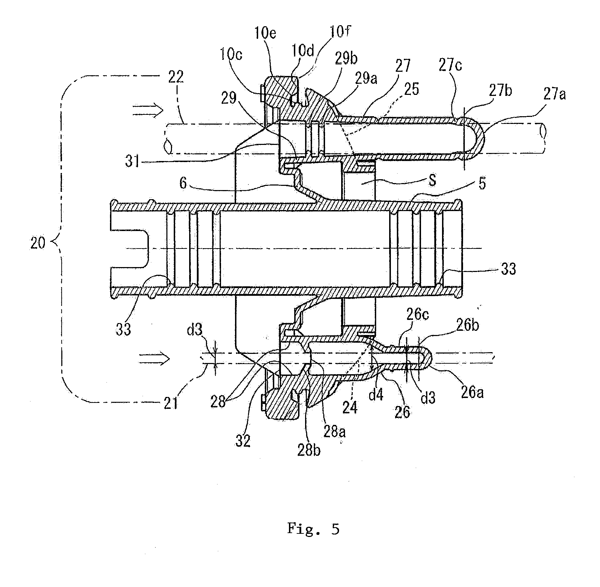

Two wire members 20 (Figure 5) including an opener cable 21 for releasing a bonnet and a feed water hose 22 for a washer penetrate the grommet 1 and are arranged from the engine room X to the passenger room Y. The wire members 20 extend from the pushing-in side P1 to the drawing-out side P2.
As shown in Figure 5, the slant wall section 11 is provided with a through-aperture 24 in order to cause the opener cable 21 to penetrate the grommet 1, while the slant wall section 11 is provided with a through-aperture 25 in order to cause the feed water feed hose 22 to penetrate the grommet 1. The through-apertures 24 and 25 are disposed on a diametrical direction of the grommet 1.

Outer guide pipes 26 and 27 protrude outward from peripheral edges around the through-apertures 24 and 25. The outer guide pipes 26 and 27 are provided on their distal ends with closing end portions 26a and 27a. When the wire members 20 penetrate the grommet 1, the closing end portions 26a and 27a are cut away to open the outer guide pipes 26 and 27. In the case where the wire members 20 do not penetrate the grommet 1, the closing end portions 26a and 27a are left on the outer guide pipes 26 and 27. Inner guide pipes 28 and 29 protrude into an interior of the grommet 1 from the peripheral edges around the through-apertures 24 and 25.

The outer guide pipe 26 of the opener cable 21 is provided on a protruding side with a smaller diameter portion 26c that has the same inner diameter as an outer diameter of the opener cable 21. A cut-away line 26b is provided on the smaller diameter portion 26c at its distal end side. When the distal end of the smaller diameter portion 26c is cut away from the outer guide pipe 26, the smaller diameter portion 26c closely contacts with an outer peripheral surface of the opener cable 21 to seal and guide the opener cable 21.

An inner diameter d4 (Figure 5) of the inner guide pipe 28 is set to be larger than an outer diameter d3 (Figure 5) of the opener cable 21. The inner guide pipe 28 is provided on an inner peripheral surface with a seal wall 28 having a through-aperture 28a with an inner diameter d3 (Figure 5). Thus, the opener cable 21 is sealed and supported by the seal wall 28b in the grommet 1. Further, the opener cable 21 is sealed and supported by the smaller diameter portion 26c of the outer guide pipe 26 of the grommet 1.

On the other hand, at the side of the feed water hose 22, the outer guide pipe 27 is provided with a smaller diameter portion 27c and a cut-away line 27b at the distal end side. The smaller diameter portion 27c closely contacts with an outer peripheral surface of the feed water hose 22 to seal it. An inner guide pipe 29 is provided on its inner periphery with two smaller diameter portions 29a and 29b. The inner peripheral surfaces of the smaller diameter portions 29a and 29b closely contact with the outer peripheral surface of the feed water hose 22 to seal it.

The annular coupling section 6 is provided on its engine room side surface in the diametrical direction with inserting ports 31 and 32 for the opener cable 21 and the feed water hose 22. The annular coupling section 6 is not bent in the V-shape at the inserting ports 31 and 32 to form the flat surfaces 6e and 6f extending in the diametrical direction, as described above.

The smaller diameter inner tube 5, through which the wire harness W/H passes, protrudes from the opposite ends of the outer tube 8 in the longitudinal direction. The inner tube 5 is provided on an inner peripheral surface of each protruding end portion from the outer tube 8 with three waterproofing lips 33.

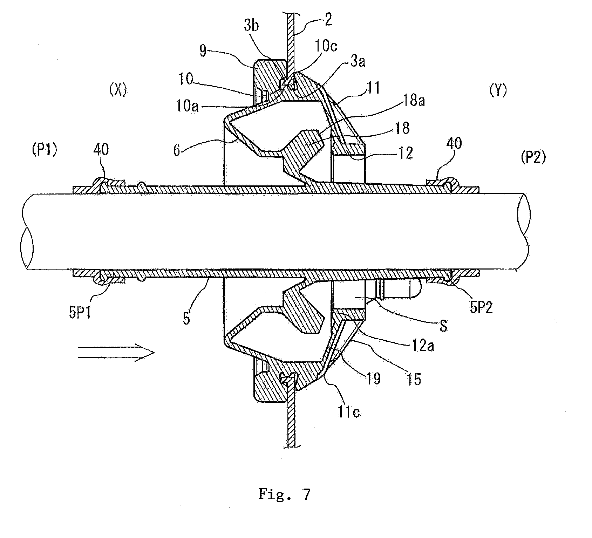

As shown in Figure 7, since the through-hole 3 in the vehicle body panel 2 for receiving the grommet 1 is an aperture with a burr 3b that protrudes from the peripheral edge 3a around the through-hole 3 to the pushing-in side P1, the vehicle body latch recess 10 in the outer tube 8 has a configuration corresponding to the burr 3b.
That is, as shown in Figure 5, the vehicle body latch recess 10 is provided on a central part of its bottom surface 10a with a seal lip 10c to contact with the burr 3b. A drawing-out side surface 10b of the vehicle body latch recess 10 at the side of the slant wall section 11 inclines a distal end of the surface 10b inward. In addition, a side surface 10d opposed to the side surface 10b is provided with a depression 10e continued to the bottom surface 10a to contain a distal end of the burr 3b. A vertical surface 10f stands up from the depression 10e so that an upper end of the vertical surface 10f extends upward over the drawing-out side surface 10b.

A process for attaching the wire harness W/H to the grommet 1 is carried out by inserting the electrical wires in the wire harness W/H while enlarging the inner peripheral surface of the inner tube 5 by a jig (not shown). After inserting the wire harness W/H into the inner tube 5, the wire harness W/H drawn out from the opposite ends 5P1 and 5P2 of the inner tube 5 and the opposite ends 5P1 and 5P2 are secured to one another by winding adhesive tapes 40 around them.

Varying sizes in diameter of the wire harness W/H are absorbed in the annular coupling section 6, so that the outer tube 8 connected through the annular coupling section 6 to the inner tube 5 is not subject to affections caused by the varying sizes. Accordingly, it is possible to maintain the outer diameter of the outer tube in a designed size. That is, since the annular coupling section 6 has a smaller thickness enough to be deformed and is formed into the V-shape, the annular coupling section 6 can respond to the varying sizes in diameter merely by changing the bending angle.

As shown in Figure 7, the grommet 1 mounted on the wire harness W/H is inserted into and attached to the through-hole 3 with the burr 3b in the vehicle body panel 2 that partitions a vehicle body into the engine room X and the passenger room Y.
A working of inserting the grommet 1 into the through-hole 3 is carried out by inserting the drawing-out end 5P2 of the inner tube 5 into the through-hole 3 from the engine room X, and then pushing the grommet 1 into the through-hole by a working person in the engine room X while holding the wire harness W/H with the grommet 1 by the working person. The grommet 1 is latched in the through-hole 3 by an one-motion operation in which a pushing-in action is effected at one time from the one side.

Specifically, since the smaller diameter side of the slant wall section 11 of the outer tube 8 is smaller than the inner diameter of the through-hole 3, the grommet 1 can be readily inserted into the through-hole 3. When the bent portion 11c of the slant wall section 11 reaches the inner peripheral surface 3a of the through-hole 3, the stepped projecting ribs 15 of the slant wall section 11 contact with the inner peripheral surface 3a, thereby causing an inserting resistance. Then, the outer tube 8 cannot be further pushed into the through-hole 3 easily from the inner peripheral surface 3a . However, if the working person holds and pushes the wire harness W/H to be drawn out from the pushing-in side P1 of the inner tube 5, the inner tube 5 that closely contacts with the wire harness W/H is advanced to the drawing-out side P2 in the drawing-out direction. The pushing rib 18 of the annular coupling section 6 connected to the inner tube 5 is also advanced to the inner surface of the slant wall section 11 of the outer tube 8 by the movement of the inner tube 5 and the projecting end 18a of the pushing rib 18 bumps onto the inner peripheral surface of the slant wall section 11. Thus, since the slant wall section 11 is pushed and moved forward by the pushing rib 18, the outer tube 8 with the slant wall section 11 passes through the through-hole 3 to the passenger room Y.

When the pushing rib 18 pushes the slant wall section 11, the stopper projection 12a can prevent the projecting end 18a of the pushing rib 18 from sliding down into the drawing-out distal end side tubular portion 12. Thus, it is possible to surely hold the projecting end 18a of the pushing rib 18 on the inner peripheral surface of the slant wall section 11 and to transmit the pushing force from the pushing rib 18 to the slant wall section 11.

Since the slant wall section 11 is provided on the outer peripheral surface with the stepped projecting ribs 15, only the top surfaces 15a of the stepped projections contact with the inner peripheral surface 3a of the through-hole 3 and the inner peripheral surface of the burr 3b, when the pushing rib 18 is inserted into the through-hole 3. Consequently, a contact area is reduced and an inserting force is lowered. Each stepped projecting rib 15 is provided in the inner peripheral surface with a groove 15h to facilitate to cause the stepped projecting rib 15 to be deflected. The smaller thickness portion between the adjacent stepped projecting ribs 15 can be easily deflected by the grooves 15k provided on the both proximal ends of each stepped projecting rib 15 and the central groove 15i in the smaller thickness portion. The slant wall section 11 of the outer tube 8 can be pushed into the through-hole 3 by pressing the pushing rib 18 onto the inner peripheral surface of the slant wall section 11 and the pushing force can be reduced.

The pushing rib 18 presses the slant wall section 11 and the distal ends of the stepped projecting ribs 15 reach the inner peripheral surface 3a of the through-hole 3. Since each stepped projecting rib 15 is provided on the distal end with slant surfaces 15c, 15f, and 15g in three cut-away sides, the inner peripheral surface 3a of the through-hole 3 and the burr 3b fall down into the vehicle body latch recess 10 as if the stepped projecting ribs 15 fall down into the through-hole 3, and the grommet 1 can be secured to the vehicle body panel 2.

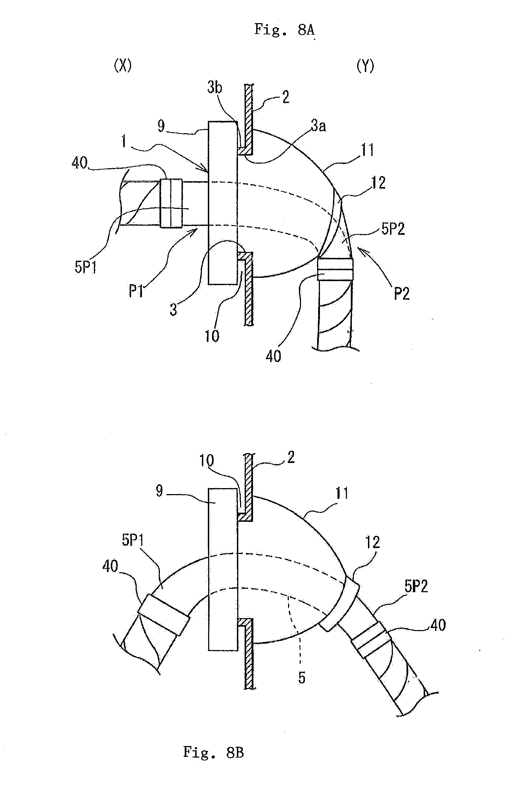

As described above, after the grommet 1 is secured to the vehicle body panel 2, as shown in Figure 8A, the wire harness W/H drawn out into the passenger room Y is sharply bent downward (or upward, rightward, or leftward) by an angle of 90 (ninety) degrees in many cases.
In the case where the wire harness W/H is bent downward by the angle of 90 degrees, the conventional grommet is pulled down at its upper part and the vehicle body latch recess floats up at the distal end side, so that a sealing function is hard to obtain.
On the contrary, since the grommet 1 of the present invention is constructed above, it is possible to prevent the vehicle body latch recess 10 from floating up and to obtain a sealing function.

That is, the wire harness W/H can closely contact with and pass through the through-hole 3, the inner tube 5 secured to the wire harness W/H by the adhesive tapes 40 follows the bending angle of the wire harness W/H, and the inner tube 5 is bent downward at the drawing-out end 5P2.
However, even if the drawing-out end 5P2 is bent downward, the outer tube 8 is not coupled to the inner tube 5 at the drawing-out end 5P2 and the great clearance S exists between the drawing-out distal end tube 12 of the outer tube 8 and the inner tube 5. Thus, since the inner tube 5 is merely bent in the clearance S between the inner tube 5 and the outer tube 8, the outer tube 8 is not bent at the drawing-out side P2.

In the case where the inner tube 5 is greatly bent by the bending of the wire harness W/H, the bending will be transmitted through the annular coupling section 6 connected to the inner tube 5 to the outer tube 8. Even in this case, the V-shaped thin annular coupling section 6 will absorb the deformation of the inner tube 5, and the outer tube 8 is not deformed by the bending of the wire harness W/H. Consequently, the vehicle body latch recess 10 of the outer tube 8 is not deformed and floats up from the inner peripheral surface 3a of the through-hole 3 or the inner peripheral surface of the burr 3b, thereby obtaining the sealing function.

Even if the wire harness W/H is bent greatly and the inner tube 5 contacts with the drawing-out distal end tube 12 of the outer tube 8 to deform the outer tube 8, since the slant wall section 11 is provided on the smaller diameter side with the smaller thickness portion 19, a stress is concentrated in the smaller thickness portion 19 upon deformation. Accordingly, only the smaller thickness portion 19 is deformed and the vehicle body latch recess 10 at the larger diameter end side of the slant wall section 11 is not deformed.

Thus, even if the wire harness W/H drawn out from the grommet 1 is bent perpendicularly, since the inner tube 5 and outer tube 8 are spaced through the great clearance S from each other at the drawing-out side P2 and an intermediate part of the inner tube 5 is coupled through the V-shaped thin annular coupling portion 6 to the outer tube 8, the deformation effect of the inner tube 5 is not applied to the vehicle body latch recess 10 of the outer tube 8.

As shown in Figure 8B, there is a case where the wire harness W/H inserted in the grommet 1 is bent at an angle of 90 degrees in the engine room X.
In this case, the inner tube 5 is bent in connection with the bending of the wire harness W/H. However, since the annular coupling section 6 connected to the inner tube 5 is formed into the V-shape and a smaller thickness, the annular coupling section 6 is deformed to absorb the deformation of the inner tube 5 and the bending effect of the wire harness W/H is not applied to the vehicle body latch recess 10 of the outer tube 8, thereby obtaining the good sealing function.

As described above, in the case where the opener cable 21 and feed water hose 22 pass through the grommet 1 mounted in the through-hole 3 in the vehicle body panel 2, the closing ends of the outer guide pipes 26 and 27 are cut away. Then, the opener cable 21 and feed water hose 22 are inserted through the inserting apertures 31 and 32 in the annular coupling section 6 into the inner guide pipes 28 and 29, are inserted into the through-apertures 24 and 25, and are further inserted into the outer guide tubes 26 and 27 to keep the cable 21 and hose 22 straightly.
At this time, the opener cable 21 and feed water hose 22 are sealed and supported by the inner guide pipe 28, 29 and outer guide pipe 26, 27 protruding from the outer tube 8. Accordingly, even if the inner tube 5 is bent, since the opener cable 21 and feed water hose 22 are inserted into the outer tube 8 and are positively supported by the inner and outer guide pipes 28, 29 and 26, 27, the bending effect of the inner tube 5 is not applied to the opener cable 21 and feed water hose 22.

It should be noted that the grommet of the present invention is not limited to the above embodiment. For example, as shown in Figure 9, the vertical side surface 10d of the vehicle body latch recess 10 may be provided on its distal end with a waterproofing rib 50 that contacts with the vehicle body panel 2.
The slant wall section of the outer tube may not be provided on the smaller diameter distal end with the drawing-out distal end side tubular portion to define a terminal end. An inner peripheral surface of the terminal end may be greatly spaced apart from the outer peripheral surface of the outer tube through a great clearance.
In the case where the opener cable 21 and feed water hose 22 do not pass the grommet, it is preferable that the pushing rib is not divided in its peripheral direction to be formed into a continuous annular configuration.
Furthermore, eight stepped projections may be provided on the slant wall section. The bent portion may not be provided on the annular coupling section from which the pushing rib protrudes.
Thus, the present invention can include various aspects without departing the gist of the present invention.

## Claims

1. A grommet that is mounted on a wire harness, is engaged with a through-hole in a vehicle body, and is made of an elastic material, comprising:
an inner tube having a smaller diameter and passing electrical cables in said wire harness in a close contact manner;
an annular coupling section protruding from an outer peripheral surface of an intermediate part between both ends of said inner tube at a pushing-in side and a drawing-out side in a longitudinal direction; and
an outer tube having a larger diameter, continued to an outer peripheral surface of said annular coupling section, and coaxially disposed around said inner tube through a space;
wherein said outer tube is provided with a slant wall section that reduces an diameter from a larger thickness portion at a coupling position with said annular coupling section to said drawing-out side, said outer tube is provided with a vehicle body latch recess between said larger thickness portion and said slant wall section in an annular manner, an inner peripheral surface at a smaller diameter end side of said slant wall section is spaced through a given clearance apart from an outer peripheral surface of said inner tube, and said both ends of said inner tube protrude outward from said outer tube at said pushing-in side and said drawing-out side.

2. A grommet according to Claim 1, wherein said slant wall section of said outer tube is provided on a smaller diameter end with a drawing-out distal end side tubular portion that extends in parallel to an axial direction of said inner tube, and said clearance is defined between an inner peripheral surface of said drawing-out distal end side tubular portion and said outer peripheral surface of said inner tube.

3. A grommet according to Claim 1 or 2, wherein a dimension of said clearance in a radial direction is set to be 1/2 to 3/2 (one-half to three-halves) of a radius of said inner tube, and when said wire harness protruding from a drawing-out side distal end of said inner tube is bent at an angle of less than 90 degrees, said slant wall section is spaced apart from said inner tube by said clearance so that said slant wall is not deformed.

4. A grommet according to any one of Claims 1 to 3, wherein said outer tube is provided on said outer peripheral surface with radial projecting ribs that extend from said smaller diameter end of said slant wall section to a larger diameter end continued to said vehicle body latch recess in an axial direction and are spaced apart from one another in a peripheral direction.

5. A grommet according to any one of Claims 1 to 4, wherein a thickness of said annular coupling section is smaller than thicknesses of said inner and outer tubes, said annular coupling section protrudes slant toward an opposite side from said slant wall section beyond a coupling point with said inner tube, a pushing rib protrudes from a slant portion of said annular coupling section toward an inner peripheral surface of said slant wall section.

6. A grommet according to Claim 5, wherein said annular coupling section is bent in a V-shape between said inner and outer tubes.

7. A grommet according to Claim 5 or 6, wherein said pushing rib is provided on a whole periphery of said annular coupling section or on divided parts in a peripheral direction of said annular coupling section.

8. A grommet according to any one of Claims 5 to 7, wherein a thickness of said pushing rib is 2 to 4 (two to four) times of that of said annular coupling section and is larger than a thickness of said slant wall section.

9. A grommet according to any one of Claims 5 to 8, wherein a projecting end of said pushing rib contacts with an inner surface of said slant wall section with said grommet being mounted on a vehicle body, and said pushing rib, said outer tube, said inner tube, and said annular coupling section surround an interior of said grommet to define a sound insulation space.

10. A grommet according to any one of Claims 5 to 9, wherein an intermediate part of said annular coupling section is bent toward said slant wall section, and said pushing rib protrudes from said bent intermediate part.

11. A grommet according to any one of Claims 5 to 10, wherein said outer tube is provided on an inner peripheral surface opposed to said pushing rib with a stopper projection, and said stopper projection serves to prevent said pushing rib from shifting from a pushing position.
